# EUROPEAN PATENT APPLICATION

(11) **EP 2 388 954 A1**
(43) Date of publication of application: **23.11.2011**
(21) Application number: 10163158.8
(22) Date of filing: 18.05.2010
(51) Int. Cl.: H04L 12/24, H04L 12/26

(54) **DNS based error reporting**

(71) Applicant: Spotify Ltd, London W8 5HD (GB)
(72) Inventor: Kreitz, Gunnar, 111 40, Stockholm (SE); Niemelä, Fredrik, 163 72, Spånga (SE)
(74) Representative: Bratt, Jan Henrik

(57) **Abstract**

The present invention relates to a method of receiving an error message from a client 11, the method comprising: receiving, by a DNS server 17, an error message in the form of a DNS request from a client 11 over the DNS protocol, the error message indicating a connectivity problem between the client 11 and a service provider 16 to which the DNS server 17 is associated; and storing the error message. The present invention further relates to a DNS server 17, as well as to the use of the DNS protocol for sending or receiving error messages.

## Description

### Field of the Invention

The present invention relates to a method, system and server for error reporting from a client of a network.

### Background of the Invention

In network communication, e.g. over the internet, where a service provider provides a service to a plurality of clients, it may be desirable for the service provider to obtain error reports from any client having problems with using or accessing the service, in order for the service provider to be able to develop its service and/or assist its clients to improve access and usability of the service for the benefit of the clients. An error that might occur is a connectivity problem between the client and the service provider. Of course, if there is a problem with connectivity, there may also be problems with sending an error report.

For online services, a large expense is helping user troubleshoot various connectivity issues. In general, these are very difficult to troubleshoot, as the available information is extremely limited.

The Domain Name System (DNS) is one of the fundamental protocols in the TCP/IP stack. The purpose of the DNS protocol is to provide a mapping from the user-friendly names commonly used to the IP addresses used in network communication.

When a DNS query is made by a client computer, it typically sends the query to a local server at its Internet Service Provider (ISP), a so called recursive resolver. The server at the user's ISP will then act as a proxy and on the user's behalf, contact a server at the hosting site to lookup the actual information. The recursive resolver may, after seeing a reply, cache the result for some time (typically in the range of 5 minutes to days).

### Summary of the Invention

It is an objective of the present invention to improve error reporting by a client in a network while there is a connectivity problem between the client and a service provider.

According to an aspect of the present invention, there is provided a method of receiving an error message from a client, the method comprising: receiving, by a DNS server, an error message in the form of a DNS request from a client over the DNS protocol, the error message indicating a connectivity problem between the client and a service provider to which the DNS server is associated; and storing information related to the error message.

Since DNS is such a fundamental internet protocol, it is very rare to restrict DNS access, even in environments where connectivity is extremely limited (examples include restrictive corporate firewalls, or pay-for-access WiFi networks where it's common that DNS works even before the user pays for access). If the environment of a client is such that connectivity to the service provider is limited, e.g. due to firewall settings, it might not be possible to send an error message reporting the connectivity problem over the regular protocol, such as Hypertext Transfer Protocol (HTTP) or Extensible Messaging and Presence Protocol (XMPP), due to the connectivity problem. However, the environment may still allow communication with the service provider via DNS requests and DNS responses over the DNS protocol. By using the DNS protocol for error reporting, there may thus be a greater likelihood of successfully reporting a connectivity error.

The error message is formed as a DNS request and sent over the DNS protocol. The error message may thus be sent by the client and received by the DNS server of the service provider, typically via and relayed by a DNS server of the internet service provider (ISP) of the client and possibly other entities of a communication system or network. The error message may thus be handled by the communication system, including e.g. the internet, just like a regular DNS request addressed to the service provider.

The client may be any client, such as a computer or mobile phone, connected to a communication system, such as the internet, and able to communicate via the DNS protocol.

The service provider may be any type of service provider, such as an online service provider, connected to a communication system, such as the internet, and able to communicate via the DNS protocol.

The DNS server is associated with the service provider, such that the service provider may access the error messages received by it or at least some information relating to them, allowing the service provider to draw conclusions and/or act based on the received error messages. Typically, a plurality of error messages may be received from a plurality of clients. The service provider may then be provided with information via the error message(s), which may e.g. be used to improve the service to avoid connectivity problems and/or be used for providing statistics and rate of connectivity problems and/or be used for monitoring the amount of connectivity problems associated with e.g. an upgrade of the service and or client software provided by the service provider.

At least a part of the error message or other information based on or relating to the error message is stored, e.g. in the DNS server itself or in a separate log server to which the error message or thereon based information is forwarded by the DNS server. Such a log server associated with the DNS server may be arranged to process the received error message or other information relating thereto, e.g. storing it or using it for statistical purposes. Again, this allows the error message or information derived therefrom to be analysed by the service provider, allowing the service provider to draw conclusions and/or act based on the error message. The error message information may be stored for any suitable amount of time, enough for performing the desired analyses by the service provider.

The DNS server may be any DNS server enabled to receive and handle error messages in the form of DNS requests, and enabling storing of the error messages.

According to another aspect of the present invention, there is provided a method of sending an error message from a client, the method comprising: sending, from the client, an error message in the form of a DNS request to a DNS server over the DNS protocol, the error message indicating a connectivity problem between the client and a service provider to which the DNS server is associated.

The discussion above relating to the method of receiving an error message is in applicable parts also relevant to the method of sending an error message. Reference is made to that discussion.

According to another aspect of the present invention, there is provided a DNS server arranged to receive an error message in the form of a DNS request from a client over the DNS protocol, the error message indicating a connectivity problem between the client and a service provider to which the DNS server is associated, the DNS server being further arranged to store information relating to the error message and/or forward such information to a log server for processing the information.

The discussion above relating to the method of receiving an error message is in applicable parts also relevant to the DNS server. Reference is made to that discussion.

According to another aspect of the present invention, there is provided a use of the DNS protocol for receiving, by a DNS server associated with a service provider, an error message in the form of a DNS request from a client, the error message indicating a connectivity problem between the client and the service provider.

According to another aspect of the present invention, there is provided a use of the DNS protocol for sending an error message in the form of a DNS request from a client to a DNS server associated with a service provider, the error message indicating a connectivity problem between the client and the service provider.

The discussion above relating to the method of receiving an error message is in applicable parts also relevant to the inventive uses of the DNS protocol. Reference is made to that discussion.

According to another aspect of the present invention, there is provided a system for error reporting, the system comprising: a client arranged to send an error message in the form of a DNS request to a DNS server over the DNS protocol, the error message indicating a connectivity problem between the client and a service provider to which the DNS server is associated; and a DNS server arranged to receive the error message from the client over the DNS protocol, the DNS server being further arranged to store information relating to the error message and/or forward the information to a log server arranged to process the information.

The discussion above relating to the method of receiving an error message is in applicable parts also relevant to the system. Reference is made to that discussion.

According to another aspect of the present invention, there is provided a method of error reporting, comprising: sending, from a client, an error message in the form of a DNS request to a DNS server over the DNS protocol, the error message indicating a connectivity problem between the client and a service provider to which the DNS server is associated; receiving, by the DNS server, the error message from the client over the DNS protocol; and storing information relating to the error message.

The discussion above relating to the method of receiving an error message is in applicable parts also relevant to the method of error reporting. Reference is made to that discussion.

### Brief Description of the Drawings

Referring now to the figures, which are exemplary embodiments:
Fig 1 is a schematic diagram of a system in accordance with one specific embodiment of the invention.
Fig 2 is a schematic flow chart of a method in accordance with one specific embodiment of the invention.

### Detailed Discussion of Specific Embodiments of the Invention

In the following, optional features of specific embodiments of the present invention will be discussed. These discussions are, if applicable, relevant to any of the above discussed aspects of the invention.

The error message may be in the form of a regular DNS request, but including information which may be interpreted as an error message by the DNS server or the service provider. The error message may e.g. include information on the identity, at the service provider, of the client or user, such as a user name or network address; how the client attempted to connect to the service provider but failed; what actions the client has taken to try to solve the connectivity problem; in what context the failure occurred; the settings used by the client; the client's network address; the client's operating system; etc. The error message may quite simply generally communicate something like "I failed to connect" or "I failed to upgrade software associated with the service provider".

The DNS server, log server or other part of the service provider may log or save information relating to the network address the error message is last sent from before reaching the service provider, typically a DNS server of the ISP of the client. The service provider may thus, depending on the number and type of error messages received from that ISP/DNS server, draw conclusions on connectivity problems associated with that specific ISP or DNS server.

Since the error message may include potentially sensitive and private information, e.g. user identity and settings, the information carried in the error message may be encrypted, e.g. using public-key encryption, and/or signed, e.g. cryptographically signed.

More than one error message in the form of a DNS request may be received by the DNS server. The error messages may be from one client or from a plurality of separate clients. The more error messages that are received by the server, the better the basis for any action taken or conclusion made by service provider, i.e. the analysis may be more accurate based on many error messages. Thus, the method may further comprise: receiving at least one other error message in the form of a DNS request from at least one other client over the DNS protocol, the at least one other error message indicating a connectivity problem between the at least one other client and the service provider to which the DNS server is associated; and storing the at least one other error message.

The DNS server and/or service provider may receive the error message without responding to it, or it may send a standard "acknowledge" response in the form of a DNS response. It may be desired to send a response in order to try to help the client to alleviate or solve the connectivity problem. Such a response may include suggested action(s) on how to try to resolve the connectivity problem. Such a suggestion may include a suggestion to try another, possibly specified, port instead of the one used; a suggestion to try to connect to another, possibly specified, server of the service provider; a suggestion to try tunnelling over an application layer protocol, such as HTTP or XMPP; a suggestion to apply encryption, such as Internet Protocol Security (IPsec), Transport Layer Security (TLS) or Secure Sockets Layer (SSL); and/or a suggestion to try to connect via a different protocol, e.g. change internet layer protocol, such as among IPv4 and IPv6, or change transport layer protocol, such as among TCP, UDP and SCTP, or change application layer protocol, such as among HTTP, XMPP and any other application layer protocol. Thus, the method may comprise: sending a response to the error message to the client, the response being sent over the DNS protocol in the form of a DNS response and including a suggested action to the client on how to try to resolve the connectivity problem. Alternatively, or additionally, the method may comprise: sending, from the client, an error message in the form of a DNS request to a DNS server over the DNS protocol, the error message indicating a connectivity problem between the client and a service provider to which the DNS server is associated. Analogously, the DNS server of the service provider may be arranged to send a response to the error message in the form of a DNS response to the client, the response being sent over the DNS protocol and including a suggested action to the client on how to try to resolve the connectivity problem.

The client may conveniently have an implemented connectivity resolving module instructing it and/or allowing it to apply the suggestions of the service provider DNS response. The implementation of the connectivity resolving module may have been instigated by the service provider. The service provider may e.g. have urged the client to run a software program that implemented the connectivity resolving module or the connectivity resolving module may have been implemented by software that needed to be installed in the client for the client to be able to access the service provided by the service provider. Thus, the method may further comprise: acting to implement a connectivity resolving module in the client.

It may be convenient to encrypt and/or sign, e.g. cryptographically sign, any response sent to the client such that the client may be sure of from where the response was sent. This may avoid security issues such as that an attacker may spoof DNS responses causing the client to connect to other hosts. Thus, public key cryptographic techniques may be employed to protect the information being sent from the service provider from being modified.

The client may be instructed to send an error report as a reaction to a problem to connect to the service provider, how to send it and what to include in it by an error reporting module implemented in the client. The implementation of the error reporting module may have been instigated by the service provider. The service provider may e.g. have urged the client to run a software program that implemented the error reporting module or the error reporting module may have been implemented by software that needed to be installed in the client for the client to be able to access the service provided by the service provider. Thus, the method may further comprise: acting to implement an error reporting module in the client.

As mentioned above, the error message in the form of a DNS request may e.g. pass via a DNS server of the client's ISP. Such a DNS server may include a cache for storing DNS requests and responses thereto with the objective of not having to forward multiple identical requests. Rather, only one request may then need to be forwarded, after which the ISP DNS server may respond to the subsequent DNS requests by itself from its cache. However, this function may counteract the objective of the present invention since it may be desired to receive all error messages sent to the service provider DNS server, not only the first one. It may thus be convenient to make sure that all error messages in the form of DNS requests are unique, at least to a sufficient extent e.g. identical DNS requests will not be repeated during a sufficient time range or sent to the same ISP DNS server, in order to ensure that the error messages are rent to and received by the DNS server of the service provider. Thus, the error message of the method may be unique, such that all error messages stored at any time, in the DNS server or elsewhere by the service provider, are unique in respect of each other.

The unique error messages may be from the same client or from a plurality of different clients.

It may be convenient to use encryption and/or signing, e.g. cryptographic signing, to make the error messages unique, thus allowing the encryption to have two functions: providing safe sending of sensitive information; and making the error message unique.

Another way of ensuring the uniqueness of error messages may be to include a unique string of nonsense in each error message. The string may be made unique by randomisation of the nonsense. Thus, each of the error messages may be unique by including a part consisting of essentially random nonsense.

In the following, specific embodiments of the present invention will be discussed with reference to the appended drawings.

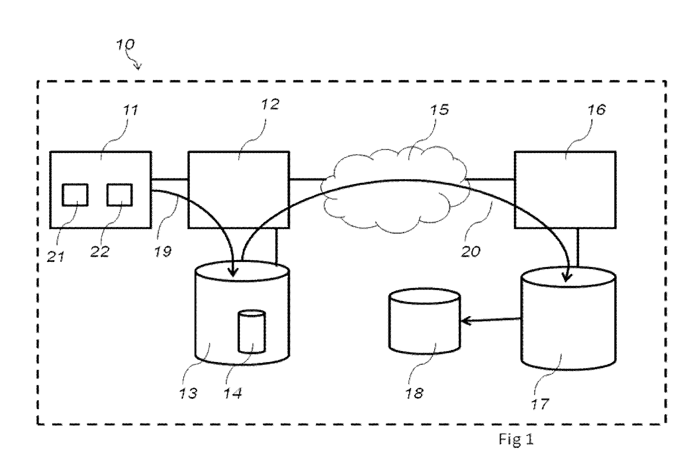

Fig 1 is a schematic diagram of a system 10 encompassing several aspects and embodiments of the present invention. The client 11, e.g. a user's computer comprising client software associated with a service provider 16, is connected to the internet 15 via the ISP 12. The ISP 12 is associated with an ISP DNS server 13 comprising a cache 14. The service provider 16 is directly or indirectly, e.g. via a second ISP (not shown), connected to the internet and is associated with a service provider DNS server 17 which is connected to a service provider log server 18. The client 11 may, in case of a connectivity problem and on instruction by an error reporting module 21 implemented in the client 11, send an error message in the form of a DNS request to the service provider 16. The DNS request/error message is first routed, as indicated by the arrow 19, to the ISP DNS server 13. The server 13 may then check whether it has already the response to such a DNS request cached in its cache 14, but since the DNS request is unique, the server 13 relays, as indicated by the arrow 20, the DNS request via the internet etc to the service provider DNS server 17. The server 17 may then store information relating to the DNS request/error message, either in itself or in the associated log server 18. Some part of, or associated with, the service provider 16, such as the server 17 or 18, appreciates that the DNS request is in fact an error message and processes it as such. The service provider 16 may send a response in the form of a DNS response back to the client. This response may then essentially follow the schematic arrows 19 and 20 in their opposite directions. The response may e.g. contain suggestions on how to alleviate or solve the connectivity problem encountered by the client 11 when trying to connect to the service provider 16. The client 11 may then, as instructed by a connectivity resolving module 22 implemented in the client 11, follow the suggested action of the DNS response to try to resolve the connectivity problem.

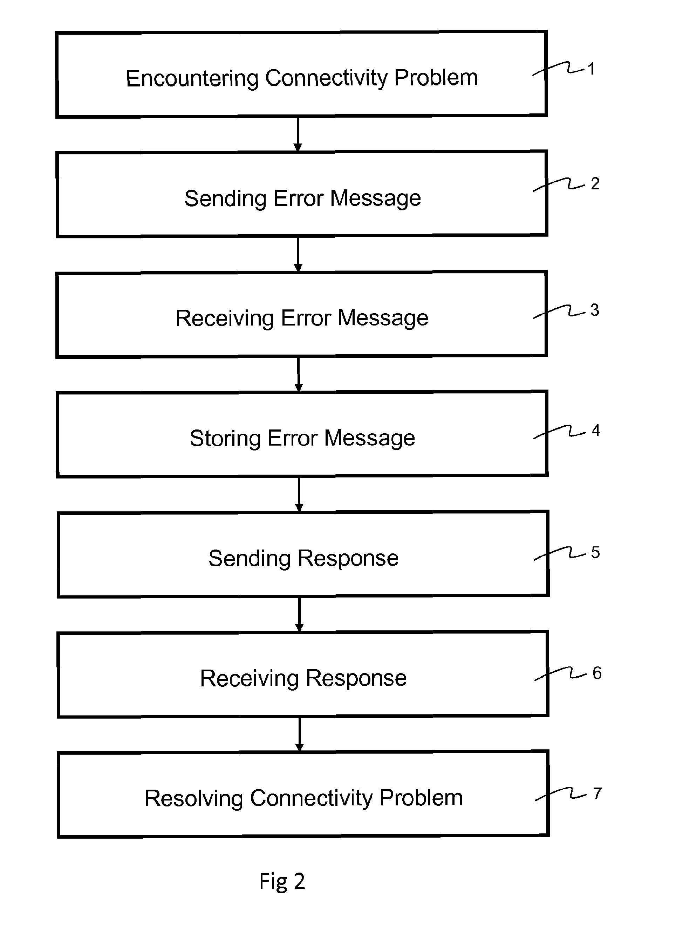

Fig 2 is a schematic flow chart encompassing several aspects and embodiments of the present invention.

A client 11 may encounter, step 1, a connectivity problem with a service provider 16. The client 11 may then, as aided by its error reporting module 21, send, step 2, an error message, in the form of a DNS request over the DNS protocol, to the service provider 16, e.g. via the ISP 12, its DNS server 13, and the internet 15. The service provider 16 via its DNS server 17 receives, step 3, the error message and stores, step 4, it or information relating to it. Based on the received, step 3, error message, the service provider sends, step 5, via its DNS server 17, a response to the error message in the form of a DNS response to the client 11, e.g. via the internet 15, the ISP 12 and its DNS server 13, whereby the client 11 receives, step 6, the DNS response. The DNS response includes suggested actions to be taken by the client 11 to try to alleviate or solve the connectivity problem. Aided by the connectivity resolving module 22 implemented in the client 11, the client 11 tries to resolve, step 7, the connectivity problem.

### Example 1

A service provider company offers an online service which is accessed through client software downloaded and installed on clients' computers. In some cases, some clients have problems to connect to the service provider's servers for various reasons, such as due to a firewall configuration. The service provider wishes to monitor how often these problems occur, and thus applies an embodiment of the present invention.

To aid the service provider in understanding in what environments these problems occur, it includes network information on the local network, brand of the local router, and the user name in the DNS request error reports sent by the client by means of an error reporting module implemented in the client by the client software from the service provider. Since such information may be sensitive, the present invention is applied using public-key encryption to protect the error reports while they are in transit to the service provider company. Thus, the service provider has the private key associated with the key in the client, allowing it, and only it, to decrypt the error reports which are encrypted by the client.

The service provider collects the error reports in a database, making them available to their Quality Assurance (QA), and Customer Relations (CR) team. Using this database, the QA team can monitor the service as deployed, and track the behaviour of e.g. new versions of the service and/or client software. The CR team can, when customers report issues, use the information in the database as an aid in troubleshooting. They can also investigate if connection issues are more prevalent on particular networks, e.g. associated with a specific Internet Service Provider (ISP). The service can also be monitored for Quality of Service (QoS) by monitoring the frequency of error reports.

### Example 2

The service provider company of Example 1 now applies another embodiment of the present invention to improve the client user experience of their service and software further. In addition to the error reporting performed by the client, the service provider, via the error reporting module, now also employs the DNS response channel to send further instructions to the client in the form of a DNS response, if the service provider is aware of a work around of the problem.

The service provider may, for example, discover that with a particular ISP, their protocol is blocked on its normal ports. To combat this, upon receiving an error report by a client which is using that ISP, the service provider proceeds as follow:
- Allocate a random port and set the used server of the service provider to listen to that port.
- Return information to the client, as the DNS response, informing the client of the new port to use.
To aid in network monitoring, it is generally preferable to have all clients connect to the same port, thus the service provider may not not want to do this for all clients, only for particular clients with a particular, identified connectivity problem.

As another example, the service provider may discover that a certain brand of router does not correctly handle long DNS responses. If the service provider uses a DNS query with a long response to locate initial servers of the service provider to connect to, this leads to the client being unable to connect. Using the DNS response mechanism, the service provider can give the client an IP to connect to when it sees an error report indicating DNS failure for a client behind a router of that model. The company may not want all clients to fall back to a specific IP, as that risks overloading that server. It should be noted that errors like the one above are unlikely to interfere with the DNS error reporting the present invention is concerned with.

As a last example, the service provider may discover that a large company or network is blocking outgoing TCP connections. The service provider can then instruct clients connecting from that company to fall over to using UDP instead. As it may be more costly for the service provider to support the service over UDP, it may not want all clients to fall over to UDP, but only those where it is necessary.

In the three types of connectivity problems and workarounds indicated above, the embodiment of the present invention allows the company to update their database of workarounds purely by server-side changes. This is a considerable improvement from putting the workaround policy in the client.

Since allowing an other party to potentially detect a client's error handling strategy could lead to many security issues, the service provider employs an embodiment of the invention where also the response from the service provider is integrity-protected by employing a cryptographic signature scheme. In such a scheme, the service provider has a private signature key, and the client has on embedded public verification key. Only the signature key can produce signatures that will be accepted as valid when verified using the verification key.

## Claims

1. A method of receiving an error message from a client, the method comprising:
receiving, by a DNS server, an error message in the form of a DNS request from a client over the DNS protocol, the error message indicating a connectivity problem between the client and a service provider to which the DNS server is associated; and
storing information relating to the error message.

2. The method of claim 1, further comprising:
receiving at least one other error message in the form of a DNS request from at least one other client over the DNS protocol, the at least one other error message indicating a connectivity problem between the at least one other client and the service provider to which the DNS server is associated; and
storing information relating to the at least one other error message.

3. The method of any one of the preceding claims, further comprising:
sending a response to the error message to the client, the response being sent over the DNS protocol in the form of a DNS response and including a suggested action to the client on how to try to resolve the connectivity problem.

4. The method of claim 3, wherein the response is encrypted and/or cryptographically signed.

5. The method of any one of the preceding claims, further comprising:
acting to implement an error reporting module in the client.

6. The method of any one of the preceding claims, wherein the error message is unique, such that all error messages stored at any time are unique in respect of each other.

7. The method of claim 6, wherein the unique error messages are from a plurality of different clients.

8. The method of claim 6 or 7, wherein the error messages are unique through encryption and/or cryptographic signing.

9. The method of claim 6 or 7, wherein each of the error messages is unique by including a part consisting of essentially random data.

10. A method of sending an error message from a client, the method comprising:
sending, from the client, an error message in the form of a DNS request to a DNS server over the DNS protocol, the error message indicating a connectivity problem between the client and a service provider to which the DNS server is associated.

11. The method of claim 10, further comprising:
receiving, by the client, a response to the error message in the form of a DNS response from the DNS server, the response being sent over the DNS protocol and including a suggested action to the client on how to try to resolve the connectivity problem.

12. A DNS server arranged to receive an error message in the form of a DNS request from a client over the DNS protocol, the error message indicating a connectivity problem between the client and a service provider to which the DNS server is associated, the DNS server being further arranged to store information relating to the error message and/or forward such information to a log server for processing the information.

13. The DNS server of claim 12, further arranged to send a response to the error message in the form of a DNS response to the client, the response being sent over the DNS protocol and including a suggested action to the client on how to try to resolve the connectivity problem.

14. Use of the DNS protocol for receiving, by a DNS server associated with a service provider, an error message in the form of a DNS request from a client, the error message indicating a connectivity problem between the client and the service provider.

15. Use of the DNS protocol for sending an error message in the form of a DNS request from a client to a DNS server associated with a service provider, the error message indicating a connectivity problem between the client and the service provider.
